# EUROPEAN PATENT APPLICATION

(11) **EP 4 321 362 A1**
(43) Date of publication of application: **14.02.2024**
(21) Application number: 22190190.3
(22) Date of filing: 12.08.2022
(51) Int. Cl.: B60J 7/06, B60P 7/04, B60J 7/08

(54) **A SYSTEM FOR COVERING A CARGO CONTAINER AND THE USE OF THE SYSTEM ON A TRUCK, LORRY OR A RAILWAY WAGON**

(71) Applicant: Hentec Oy AB, 02600 Espoo (FI)
(72) Inventor: Haga, Ulf, 02600 Espoo (FI)
(74) Representative: Boco IP Oy Ab

(57) **Abstract**

The invention concerns a system for covering a cargo container (3) having an open upper side. The system comprises a cover (9) of tarpaulin or a similar type of material having a width and a length, the cover (9) being adapted to be spread out over the upper side of said container by a mechanism (5-8). The mechanism comprises at least one laterally extendable and retractable arm (5), each arm comprising a plurality of bars linked to each other by joints, said bars being retracted and stacked together at a first end of the container (3). The arms (5) are in an extended position reaching out from the first end to an opposite end of the container, the cover (9) being contained (8) at the first end of the container, and the mechanism (5-8) when extending from the first end of the container spreads the cover material from the container (8) to the second end of the cargo container (3) to cover the open upper side of the container.

## Description

### FIELD OF THE INVENTION

The present invention relates to systems for covering cargo containers. More specifically, it relates to open cargo containers, typically of the kind to be loaded on an unloaded from a truck, lorry, wagon or similar vehicle.

### BACKGROUND OF THE INVENTION

Cargo containers are usually steel containers which are rented by a service and brought to the customer's location to be filled with any material, usually waste, of their choice. After being filled, they are removed by the service and the content is disposed of. The containers may be standard containers used for intermodal shipping, or custom designed.

This invention relates to containers having an open upper side. During transport, there are emerging regulation and environmental requirements that such an open upper side must be covered. This may be done in various ways, including a cover of tarpaulin or a similar type of material, which is spread over the container by hand or by some mechanism, and secured to place.

### OBJECT OF THE INVENTION

The existing solutions are either based on laborious manual work or involves space-requiring heavy mechanisms. There is thus a need to find a solution to the problem of spreading tarpaulin or similar materials over an open container, that is compact, fast and simple.

In order to accomplish this, various embodiments of the invention are characterized by the features presented in the appended claims.

### BRIEF DESCRIPTION OF THE DRAWINGS

The various embodiments of the invention are described in the following in more detail by making reference to the attached drawings, in which
Fig. 1 shows a truck with a system for covering a cargo container according to some embodiments of the invention with the cargo cover system in a transport position;
Fig. 2 shows the truck of Fig. 1 with one embodiment of the cargo cover system in a ready-to-operate position.
Fig. 3 schematically shows the truck and container of Fig. 2 seen from a top perspective;
Fig. 4 shows the inventive cargo cover system in use;
Fig. 5 shows a truck with a system for covering a cargo container according to some other embodiments of the invention with the cargo cover system;
Fig. 6 shows a detail of the inventive cargo cover system.

### DETAILED DESCRIPTION OF PREFERRED EMBODIMENTS

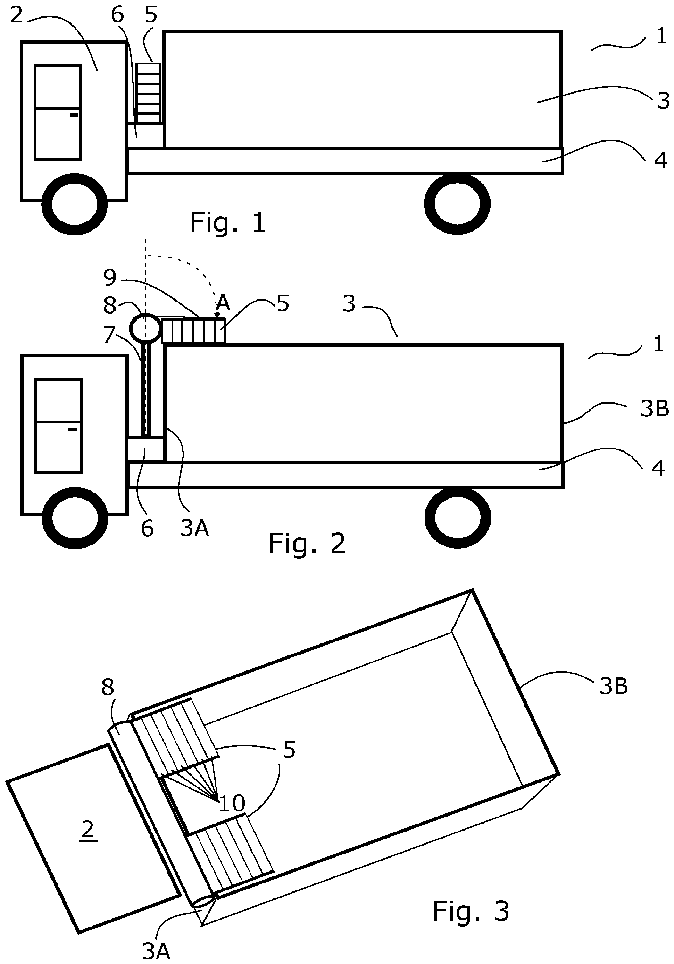

Referring now to Fig. 1, a truck 1 with a system for covering a cargo container according to some embodiments of the invention is shown. Here, the inventive cargo cover system 5, 6 is tucked away for transport between the truck cabin 2 and an open container 3 in a low location. Alternatively, without parting from the present invention, the cargo cover system may be located in a high transport location at the upper edge of the container 3, when in a transport position. The cargo container may also be a container placed on a train wagon, whereby the inventive cargo cover system may be installed on a train wagon. To this end, it is realized that the cargo cover system may be implemented in an easy-to-remove-and-install configuration, to make the system readily transferable.

In Fig. 2 is shown the truck of Fig. 1 with the cargo cover system in a ready-to-operate position, where a laterally extendable and retractable arm 5 is elevated to a high location at the upper edge at a first end 3A of the container 3. The arm 5 may be rotated or tilted 90 degrees to the right to assume a lateral position, as illustrated by arrow A. An elevation mechanism 7 may be powered by one or several hydraulic or pneumatic cylinders, mechanical lazy tongs, or it may be electrically powered. The required power units for the mechanism 7 may reside in item 6. A rotating or tilting unit 8, which allows the arm 5 to be rotated between a vertical and a lateral position, may also contain a pack or a roll of tarpaulin 9 or the like cover material, thus having a double function as a containment unit for the cover 9. The expression "containment unit" in the context of a storage unit for the cover 9 is to be understood as a synonym to the word "container ". One end of the cover material 9 is attached to the far second ends of the arms 5, when the arms are extended. The roll may be spring-loaded or motorized, in order to retract the cover material back into unit 8.

Alternatively to a retracting roll, the cover material 9 may be unloaded from and loaded back into its container 8 by folding, or by any other suitable means, depending on the material of the cover and other design choices affecting the choice of such a mechanism. Obviously, the containment unit for the cover material may also be separate from the rotating or tilting unit 8.

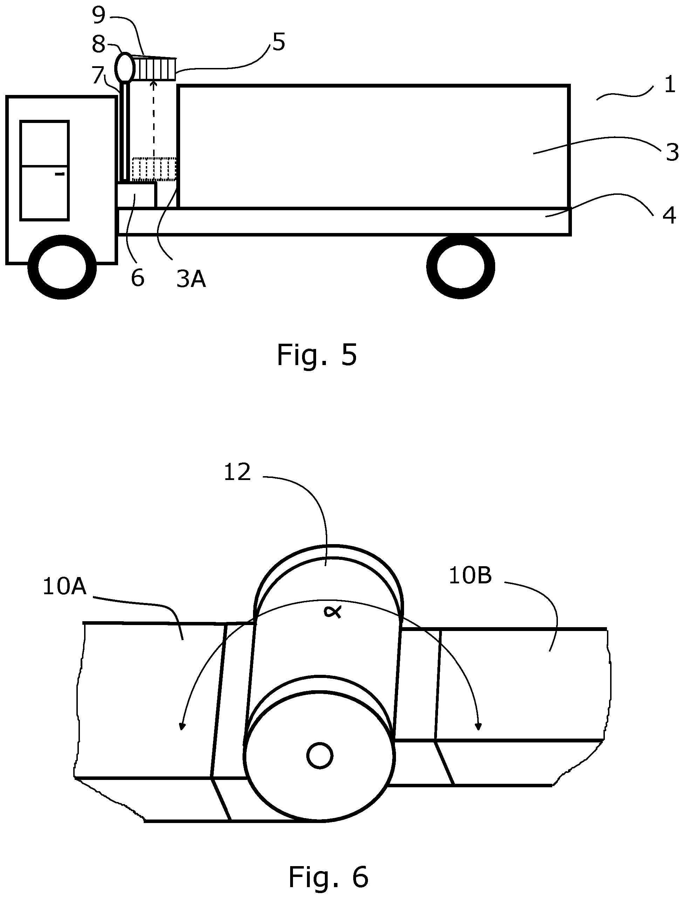

In Fig. 3 is schematically shown a truck and container like the one seen in Fig. 2, from a top perspective. As can be seen, the cargo container 3 has an open upper side. The cover 9 is not shown, for clarity. As shown in Fig. 3, in this exemplary embodiment two laterally extendable and retractable arms 5 are tilted in their lateral position and aligned with the upper surface of the container at the first end 3A of the container 3. Each arm 5 may have a separate rotating or tilting unit. The arm 5 comprises a plurality of bars 10 linked to each other by joints (see Fig. 5). The bars 10 are here shown in a stacked configuration, as the arms 5 are in a retracted position. The bars inherently tend to extend the bars towards the second end 3B of the container, due to a spring force in the joints. The cover 9, which is pulled by a power source (not shown) preferably in the containment unit 8 or in connection with it, pulls the bars to a stacked position when uncovering the container 3. The power source may be an electrical motor. It is clear to one skilled in the art that the number of arms 5 may vary from one to several arms according to design choices, the width of the container to be covered, etc.

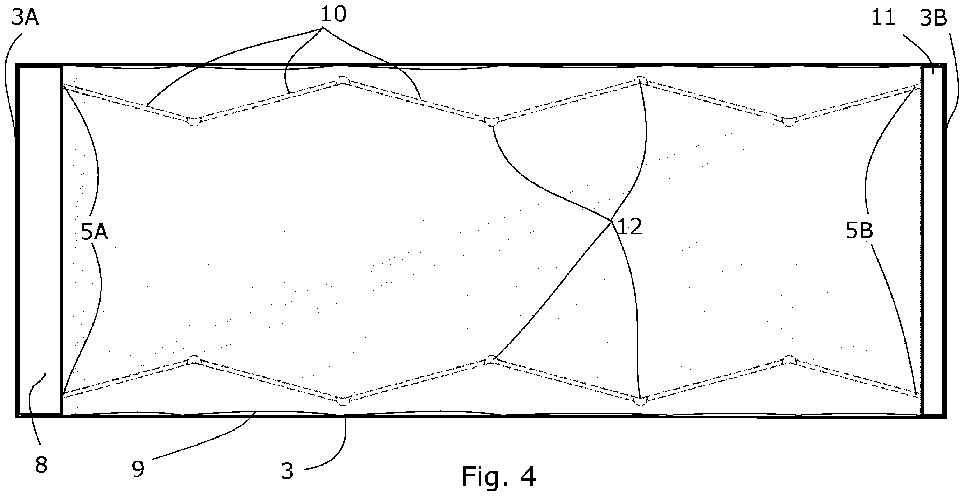

Fig. 4 shows the inventive cargo cover system in use with the linked bars 10 in their fully extended position. The bars 10 with intermediate joints 12 are shown with dashed lines below the cover 9. The cover 9 has a width and a length that corresponds to the dimensions of the open upper side of the container 3. In this embodiment, snow and other deposits may easily be wiped off the cover 9 before retracting it back into the container unit 8. However, the cover may in some embodiments be located beneath the bars and joints 10, 12.

As shown in Fig. 4, the two arms 5 of the inventive system are in their fully extended position reaching out from their first ends 5A at the first end 3A of the container to the opposite second end 3B of the container in a zig-zag- like manner, as shown. During their movement towards the second end 3B, the far second ends of the arms 5B, to which the cover 9 is attached to, conveys and spreads the cover 9 from its container 8 at the first end 3A, to finally cover the open upper side of the container 3.

In some embodiments, the arms 5 may be provided with permanent or electromagnetic magnets at their far ends 5B to allow the ends to engage at said second end 3B of said container, in order to secure fastening of the far ends of the arms at an end portion 11 of the container 3. The end portion 11 may, as is usually the rest of the container, be made of steel and have the shape of a bar, rail or the like. Alternatively or in addition, the end portion 11 may include some mechanical fastening or slot mechanism which engages with ends 5B of the arms, in order to keep the arms from swinging laterally during container transport The end portion may also be omitted altogether.

In some embodiments, a camera system or imaging sensors may be installed to automatically guide, or to provide a visual image to an operator to manually guide the far ends 5B of the bars 5 in a proper position to engage with the end portion 11. In some embodiments, audio signals may be used to warn and/or inform the operator and any nearby persons of the various phases of covering or uncovering the cargo container. For example, a specific signal may be applied when the bars are properly engaged with the end portion 11 and the container is ready for transport.

It can also be envisaged that said magnets may also be used to secure the sides of the cover 9 to engage with the sides of the (steel) container 3, in order to tighten the cover 9 against the sides of the container 3. Alternatively, the sides of a folded cover 9 may be provided with openings with reinforcing eyelets in a tarpaulin-like style. A line would then run through the eyelets from the first end 3A to the far end 3B of the container 3.

In Fig. 5 is shown an embodiment of the inventive system, where the arm 5 consists of a retracted pack of bars fixed in a lateral position. Similarly to Fig. 2, they may be lowered by the elevation mechanism 7 to a low location (shown with dashed lines) for storage against the first wall 3A the container 3, and elevated by the mechanism 7 to a high location, as shown by the dashed upright arrow.

In Fig. 6 is shown as a detail of the inventive system a typical joint 12 with attached bars 10A, 10B. The bars may swivel around the joint 12 between an angle α of 0 - 180°, or either less or more. The joints 12 may contain leaf springs which strive to extend the bars 10, and are forced in a stacked position where α ≈ 0° by the force of the withdrawing cover 9.

For one skilled in the art, it is clear that the embodiments described above are examples, and that the various embodiments of the invention may vary within the scope of the appended claims.

## Claims

1. A system for covering a cargo container (3) having an open upper side, the system comprising a cover (9) of tarpaulin or a similar type of material having a width and a length, said cover (9) being adapted to be spread out over said upper side of said container by a mechanism (5-8), wherein said mechanism comprises at least one laterally extendable and retractable arm (5) comprising a plurality of bars (10) linked to each other by joints (12), said bars being retracted and stacked together at a first end (3A) of said container (3), whereby said arm (5) in an extended position is reaching out from said first end to an opposite end (3B) of said container, and wherein said cover (9) is contained in a containment unit (8) at said first end (3A) of said container and the mechanism (5-8) when extending from said first end of said container spreads said cover material from said containment unit (8) to said second end (3B) of said cargo container (3) to cover said open upper side of said container.

2. A system according to claim 1, wherein the arm (5) when retracted may be rotated between a vertical and a lateral position at said first end (3A) of said container, to allow the retracted pack of bars (10) to be turned in a vertical position for storage against a wall of said first end (3A) of said container (3).

3. A system according to claim 2, wherein the arm (5) when retracted and turned in a vertical position may be lowered by an elevation mechanism (7) to a low location for storage against said wall of said first end (3A) of said container (3), and elevated by said mechanism (7) to a high location for the arm (5) to be turned to its lateral position.

4. A system according to claim 1, wherein the arm (5) is fixed in a lateral position and may be when retracted lowered by an elevation mechanism (7) to a low location for storage against said wall of said first end (3A) of said container (3), and elevated by said mechanism (7) to a high location for the arm (5).

5. A system according to any of claims 1 - 4, wherein said laterally extendable and retractable arm (5) has a first end (5A) and an opposite second end (5B), the second end (5B) being provided with magnets to allow said second end to engage with said second end (3B) of said container in order to secure fastening (11) of said second ends of said arms.

6. A system according to any of claims 1 - 5, wherein said cover material being contained (8) as a roll.

7. A system according to claim 1 - 5, wherein said cover material being contained (8) in a folded configuration.

8. The use of a system according to any of claims 1- 7, when installed on a truck, lorry or the like adapted to carry cargo containers on a flatbed or on a trailer.

9. The use of a system according to any of claims 1 - 7, when installed on a railway wagon adapted to carry cargo containers.

10. A truck, lorry or similar motorized vehicle being equipped with a cargo container covering system according to any of claims 1 - 7.

11. A railway wagon being equipped with a cargo container covering system according to any of claims 1-7.
